(19) Europäisches Patentamt
European Patent Office
Office européen des brevets

(11) Publication number : **0 686 656 A2**

# (12) EUROPEAN PATENT APPLICATION

(21) Application number : **95401321.5**

(51) Int. Cl.[6] : **C08G 63/08**

(22) Date of filing : **08.06.95**

(30) Priority : **08.06.94 JP 148725/94**
**13.12.94 JP 332198/94**

(43) Date of publication of application :
**13.12.95 Bulletin 95/50**

(84) Designated Contracting States :
**CH DE FR GB IT LI NL**

(71) Applicant : **Takasago International Corporation**
**19-22, Takanawa 3-chome**
**Minato-ku**
**Tokyo (JP)**

(72) Inventor : **Hori, Yoji, Takasago Int. Corp. Central Res. Lab.**
**4-11, Nishiyawata 1-chome**
**Hiratsuka-shi, Kanagawa (JP)**
Inventor : **Kobayashi, Tohru, Takasago Int.Corp.Centr.Res.Lab.**
**4-11, Nishiyawata 1-chome**
**Hiratsuka-shi, Kanagawa (JP)**
Inventor : **Hongo, Hideyuki, Takasago Int.Corp.Centr.Res.Lab.**
**4-11, Nishiyawata 1-chome**
**Hiratsuka-shi, Kanagawa (JP)**
Inventor : **Yamaguchi, Akio, Takasago Int.Corp.Centr.Res.Lab.**
**4-11, Nishiyawata 1-chome**
**Hiratsuka-shi, Kanagawa (JP)**
Inventor : **Takahashi, Yoko, Takasago Int.Corp.Centr.Res.Lab.**
**4-11, Nishiyawata 1-chome**
**Hiratsuka-shi, Kanagawa (JP)**
Inventor : **Imai, Takashi, Takasago Int.Corp.Centr.Res.Lab.**
**4-11, Nishiyawata 1-chome**
**Hiratsuka-shi, Kanagawa (JP)**
Inventor : **Hagiwara, Toshimitsu, c/o Takasago Int. Corp. Lab.**
**4-11, Nishiyawata 1-chome**
**Hiratsuka-shi, Kanagawa (JP)**

(74) Representative : **Gillard, Marie-Louise et al**
**Cabinet Beau de Loménie**
**158, rue de l'Université**
**F-75340 Paris Cédex 07 (FR)**

(54) **Optically active biodegradable block copolyester and its preparation**

(57) An optically active block copolymer polyester comprising of structural units represented by the following general formulas (I) and (II) :

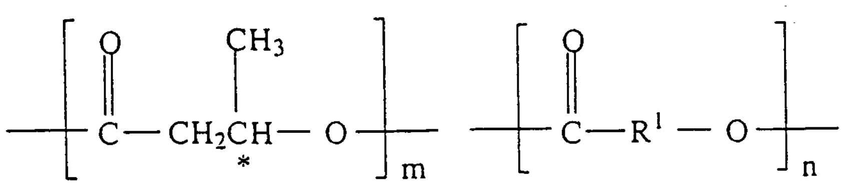

(I) (II)

(wherein *C stands for an asymmetric carbon atom and m and n each for a natural number in the range of from 300 to 5000) is obtained by subjecting an optically active β-butyrolactone and lactone compound other than the optically active β-butyro-lactone to sequential ring-opening copolymerization in the presence of a catalyst. This optically active block copolymer polyester possesses a high molecular weight and a high melting point (not lower than 130°C) and forms a biodegradable and hydrolyzable material of high strength capable of resisting to the impacts of actual use conditions.

EP 0 686 656 A2

## BACKGROUND OF THE INVENTION

### Field of the Invention:

This invention relates to an optically active block polyester copolymer and a method for the production thereof.

### Description of the Prior Art:

In recent years, sparingly decomposable films and fishing lines have been discarded at random, which has aggravated the issue of environmental pollution. Therefore, there is a need for plastic materials which are easily decomposed by microorganisms living in the natural environment. Further, such plastic materials preferably possess biocompatibility, are liable to in vivo decomposition and absorption and are capable of retaining strength while the texture of the plastic materials is undergoing regeneration, whereas quickly vanishing after the regeneration is completed.

Aliphatic polyesters have been recognized as biodegradable and biocompatible compounds. Among aliphatic polyesters, poly[(R)-3-hydroxybutyric acid] (hereinafter referred to briefly as "P[(R)-3HB]") which is a thermoplastic resin having a high melting point (about 180°C) and is accumulated in microorganism cells has been attracting attention ("Biodegradable macromolecular materials," Yoshiharu Doi, 1990, p. 21, Industrial Investigation Society Ed.). It has also been known that numerous species of microorganisms are capable of accumulating various poly[(R)-3-hydroxyalkanoic acids] (hereinafter referred to briefly as "P[(R)-3HA]") ("Biodegradable macro-molecular materials," Yoshiharu Doi 1990, p. 21, Industrial Investigation Society Ed.). As the products having improved properties with respect to P[(R)-3HB], a copolymer of (R)-3-hydroxybutyric acid with (R)-3-hydroxyvaleric acid (hereinafter referred to briefly as "P[(R)-3HB-co-(R)-3HV"]) and a copolymer of (R)-3-hydroxybutyric acid with 4-hydroxybutyric acid (hereinafter referred to briefly as "P[(R)-3HB-co-4HB]") have been reported respectively by P. A. Holmes (Phys. Technol., 1985, (16), p. 32) and Doi et al. (Polym. Commun. 29, 174 (1988)). These copolymers are random copolymers (Macromolecules 1986, (19), 2860; Macromolecules 1988, (21), 2722).

Recently, various macromolecular biodegradable random polyester copolymers having (R)-3-hydroxybutyric acid units have been chemically synthesized by ring-opening copolymerization of (R)-β-butyrolactone (hereinafter referred to briefly as "(R)-BL") with various lactones in the presence of a distannoxane catalyst (Macromolecules, 1993, (26), 4388).

By synthesizing a random copolymer as described above, the degree of crystallization of a polyester can be lowered and the property of brittleness can be improved. A random copolymer, however, is generally a cause for lowering the melting point of the polyester. For the purpose of synthesizing an aliphatic polyester which is biodegradable and has a melting point of not lower than 100°C, the macromolecular compound must contain an optically active 3-hydroxybutyric acid unit and an optically active L-lactic acid unit or glycolic acid unit in a major proportion. This fact raises a commercially serious problem by increasing the cost of production. Further, with a random copolymer, it is relatively difficult to obtain a soft film or rubber while keeping a high melting point and high strength intact.

For the solution of this problem, the idea of synthesizing a block polyester copolymer may be conceived. M. S. Reeve et al. have obtained a block polyester copolymer of P[(R)-3HB] with poly-ε-caprolactone (hereinafter referred to briefly as "P[(R)-3HB]-PCL"), a block polyester copolymer of P[(R)-3HB] with poly-L-lactide (hereinafter referred to briefly as "P[(R)-3HB]-P(L-LA)"), and a block polyester copolymer of P[(R)-3HB] with poly-DL-lactide (hereinafter referred to as "P[(R)-3HB]-P(DL-LA)") by subjecting a microorganism-originated P[(R)-3HB] to permethanolysis thereby producing an oligomer, then by allowing triethyl aluminum to react with the terminal hydroxyl group of the oligomer, and having the reaction product as a polymerization initiator react with ε-caprolactone (hereinafter referred to briefly as "CL"), L-lactide (hereinafter referred to briefly as "L-LA"), or DL-lactide (hereinafter referred to briefly as "DL-LA") (Macromolecules, 1993, (26), 888).

The P[(R)-3HB]-PCL which is obtained by the reaction of a microorganism-originated P[(R)-3HB] with CL in the presence of a catalyst such as methanesulfonic acid, for example, is disclosed in JP-A-04-153,215. A block polyester copolymer of racemiform β-butyrolactone (hereinafter referred to briefly as "BL") with CL (hereinafter referred to briefly as "P(3HB)-PCL") and a block polyester copolymer of BL with β-propiolactone (hereinafter referred to briefly as "PL") both produced in the presence of a diethyl zinc/water catalyst are disclosed in JP-A-05-320,323. Further, a block polyester copolymer, P(3HB)-P(3HP), of BL with PL produced in the presence of an aluminum porphyrin catalyst or a crown ether and a potassium metal catalyst is reported (Macromolecules, 1984, (17), 2217 and Makromol. Chem., 1987 (188), 1575).

As a material for gradually releasing the chemicals, a block polyester copolymer of L-LA or DL-LA with CL

(hereinafter referred to briefly as "P(L-LA)-PCL" or "P(DL-LA)-PCL") is reported (J. Polym. Sci.: Polym. Lett. Ed., 1983, (21), 593, Macromolecules, 1991, (24), 3027, Polym. Bull., 1993 (31), 9, and Macromolecules, 1991, (24), 3027).

The block copolymerization of a lactone with another lactone must rely on an activated polymerization method. To be more specific, when the first lactone is subjected to ring-opening polymerization in the presence of a catalyst, the polymer thus produced forms an active state in which the terminal part is linked to the catalyst. When the other lactone is added to the polymerization system, it induces a gradual insertion reaction between the polymer terminal and the catalyst and consequently an elongation of the polymer chain. Otherwise, the block polyester copolymer cannot be synthesized.

However, in any of the catalysts used in the reports cited above, macromolecular block polyester copolymers selected among a wide range of different species of lactones have never been obtained. According to the report made by M. S. Reeve et al. (Macromolecules, 1993, (26), 888), for example, the block polyesters obtained have high melting points ranging from 135 to 151°C and still have number-average molecular weights not higher than 10,000. These block polyesters *per se* cannot serve as high strength materials.

The P[(R)-3HB]-PCL disclosed in JP-A-04-153,215 is designated as a "block polyester copolymer". It is, however, thought rather to be a simple blend of P[(R)-3HB] and PCL and not to be a block polyester copolymer (as may be remarked from the Comparative Example 1 described hereinbelow): the fact that the polyester disclosed in the patent specification has an average molecular weight not higher than 71,000 and barely serves as an efficient material because of its high brittleness clearly suggests that it is not a copolymer but rather a blend.

The P(3HB)-PCL which is disclosed in JP-A-05-320,323 has a relatively high number average molecular weight of about 205,000. Since BL, which is one of the raw materials (comonomers) to be used therefor, is a racemic compound, the produced P(3HB)-PCL has a melting point lower than 100°C. Such level of melting point for any of the polyesters which are generally usable. Further, since the BL is a racemic compound, the produced P(3HB)-PCL has a rubbery property and does not form a hard crystalline material.

## SUMMARY OF THE INVENTION

It is therefore an object of this invention to provide a novel optically active block polyester copolymer easily biodegradable and hydrolyzable, possessing a sufficiently high molecular weight and high melting point so as to withstand the conditions of practical use, and to serve as a high strength material.
Another object of the invention is to provide a commercially advantageous method for the production for the polyester.

The present inventors have carried out a number of studies which aim at solving the problems raised in the prior art as described above. As a result of these studies, they have found that when an optically active (R) form or (S) form of β-butyrolactone and a lactone other than the optically active β-butyrolactone are gradually introduced into a reaction system in the presence of a tin catalyst, these lactones readily undergo a ring-opening polymerization and produce a corresponding optically active block polyester copolymer. The present invention has been elaborated on the basis of this finding.

Specifically, this invention provides an optically active block polyester copolymer comprising structural units represented by the following general formulas (I) and (II):

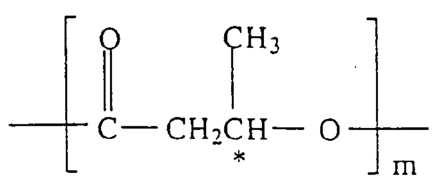
(I)

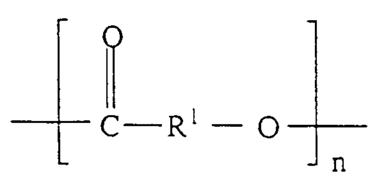
(II)

(wherein *C stands for an asymmetric carbon atom, $R^1$ for a group selected from the class consisting of $-(CH_2)_x-$, $-CH_2CH(CH_3)-$, $-CH_2CH(C_2H_5)-$, $-CH(CH_3)CH(CH_3)-$, $-C(CH_3)_2CH_2-$, $-CH(CH_3)CH_2CH_2-$, $-CH_2CH(CH_3)CH_2-$, $-CH_2CH_2CH(CH_3)-$, $-CH_2CH(CH_3)CH_2CH_2-$, $-CH(CH_3)OCOCH-(CH_3)-$, $-CH_2OCOCH_2-$, $-CH_2CH(CH_3)OCH_2CH_2-$, $-(CH_2)_7CH=CH(CH_2)_6-$, $-(CH_2)_{10}O(CH_2)_4-$, $-(CH_2)_9O(CH_2)_5-$, and $-(CH_2)_8O(CH_2)_6-$, x for a natural number ranging from 2 to 15, and m and n each for a natural number ranging from 300 to 10 000).

This invention also provides a method for the production of the aforementioned optically active block polyester copolymer, characterized by subjecting an optically active β-butyrolactone and a lactone other than the

optically active β-butyrolactone mentioned above to gradual ring-opening copolymerization in the presence of a catalyst.

## BRIEF DESCRIPTION OF THE DRAWINGS

This invention will be better understood and the objects, features, and advantages thereof other than those set forth above will become apparent from the following detailed description of the preferred embodiments, with reference to the annexed drawings, wherein:

Fig. 1 shows the results of biodegradability test performed on various test examples of polymers, represented by the relation between exposure time(expressed in number of weeks) and decrease in polymer weight (mg).

Fig 2 shows a DSC (thermal analysis) data obtained from the polymer produced in Comparative Example 1.

Fig. 3 shows a DSC (thermal analysis) data obtained from a simple blend of synthetic P[(R)-3HB] and PCL.

Fig. 4 shows a DSC (thermal analysis) data obtained from the P[(R)-3HB]-PCL block polyester produced in Example 1.

## DETAILED DESCRIPTION OF PREFERRED EMBODIMENTS

Now, this invention will be described more specifically below. The block type polyester copolymer of this invention comprises the structural units (I) and (II) mentioned above. The polyester may contain other comonomer in a small proportion. The symbols m and n indicate the numbers of the structural units (I) and (II) and each of them stands for a number ranging from 300 to 10000, preferably from 300 to 5000. However, when the lactones to be used have rings of not more than seven members and relatively small molecular weights, the symbols may represent a natural number ranging from 400 to 6000, for example from 400 to 5000.

The optically active block polyester copolymer of this invention is preferably so defined that the molar ratio of the structural unit (I) to the structural unit (II) is in the range of 10 - 90 : 90 - 10 and the weight average molecular weights (hereinafter occasionally referred to as "Mw") range from 60000 to 2000000, preferably from 75000 to 1200000.

The optically active (R)-β-butyrolactone and the (S)-β-butyrolactone which are the raw materials for the optically active block polyester copolymer of this invention can be easily obtained, for example, by the method that the present inventors have disclosed in JP-A-04-210,683 and JP-A-05-345,867, namely by subjecting a diketene to asymmetric hydrogenation in the presence of a ruthenium-optically active phosphine complex as a catalyst.

Now, the lactone which forms the structural unit (II), i.e. one of the raw materials for the block polyester copolymer of this invention is described below.

First, the optically active (R)-β-valerolactone and the (S)-β-valerolactone can be obtained, for example, by the method proposed by Y. Zhang et al., namely through a process comprising four steps starting from 3-hydroxyvalerate (Macromolecules, 1990, (23), 3206). Then, the optically active (R)-7-methyl-1,4-dioxepan-5-one and the (S)-7-methyl-1,4-dioxepan-5-one can be obtained, for example, by the method that the present inventors have disclosed in JP-A-04-316,757, namely through a process comprising three steps starting from an optically active methyl-3-hydroxybutyrate.

The α,α-dimethyl-β-propiolactone can be obtained, for example, by the method disclosed by Yamashita, Y., Ishikawa, Y., and Tsuda, T.: Kogyo Kagaku Zasshi 1964, 67,252 and the α-β-dimethyl-β-propiolactone, for example, by the method disclosed by Dervan, P. B. and Jones, C. R.: J. Org. Chem., 1979, 44,2116.

As concrete examples of the other lactone which is usable in the present invention, β-butyrolactone, β-propiolactone, α-methyl-β-propio-lactone, γ-butyrolactone, α-methyl-γ-butyrolactone, β-methyl-γ-butyrolactone, γ-methyl-γ-butyrolactone, glycolide, L-lactide, DL-lactide, valerolactone, β-methyl-δ-valerolactone, ε-caprolactone, 15-pentadecanolide, 16-hexadecanolide, 9-hexadecen-16-olide, 12-oxa-16-hexadecanolide, 11-oxa-16-hexadecanolide, and 10-oxa-16-hexadecanolide may be cited.

The lactones mentioned above are either commercially available or synthetically obtainable. They are preferably refined by distillating twice from a solution containing calcium hydride and then stored in an inert gas until use.

For the polyester of this invention, the lactones mentioned above are used in the form of racemic compounds or optically active compounds. When necessary, two or more of these lactones may be used in combination.

The amounts of the lactones to be subjected to the block copolymerization in this invention are preferably so dispensed that the molar ratio of the structural unit (I) to the structural unit (II) falls in the range of 10 - 90:

90 - 10 as mentioned above. The molar ratio is more preferably in the range of 20 - 80: 80 - 20 and most preferably in the range of 30 - 70 : 70 - 30.

The block copolymerization in this invention is carried out, for the first stage of polymerization: by placing an optically active β-butyrolactone in a reaction vessel either containing an inert solvent or containing no solvent and being filled with an inert gas such as nitrogen or argon, adding to the reaction vessel a catalyst which will be described hereinbelow, and allowing the lactone to react under normal pressure at a temperature ranging from 60 to 180°C for a period ranging from 30 minutes to five hours and, for the second stage of reaction: adding a small amount of an inert solvent to the resultant reaction solution thereby lowering the viscosity thereof, then adding a lactone different from the optically active β-butyrolactone used in the first stage and allowing this lactone to react with the polymer issued from the first stage for a period ranging from one to 48 hours. As a result, an AB type block copolymer can be obtained.

The copolymerization is otherwise carried out by a method which comprises polymerizing various species of lactones in the first stage and adding an optically active β-butyrolactone to the resultant polymer of the first stage thereby obtaining a BA type block copolymer in the second stage. Further, the block copolymerizations of the ABA type, ABC type, etc. are effected by allowing an optically active β-butyrolactone or other lactone to react with the AB type block copolymer by following the procedure described for the second stage.

As concrete examples of the tin type catalyst to be used effectively in the polymerization reaction, dibutyl tin oxide, dioctyl tin oxide, tin dioctylate, and dibutyl tin laurate may be cited. Also the distannoxane catalysts represented by the following general formula (III):

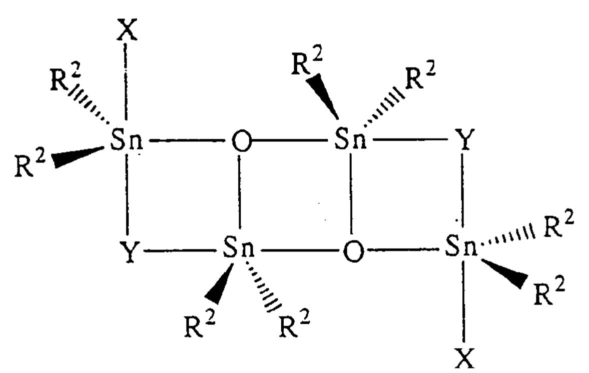

(III)

(wherein $R^2$ stands for an alkyl group having from one to 12 carbon atoms or a phenyl group, X for a member selected from the group consisting of Cl, Br, and NCS, and Y for a member selected from the class consisting of Cl, Br, NCS, OH, an alkoxy group having from one to four carbon atoms, and a phenoxy group) may be cited. As concrete examples of the distannoxane catalyst of the general formula (III) mentioned above, 1,3-dichlorotetrabutyl distannoxane, 1,3-dichlorotetraphenyl distannoxane, 1,3-dichloro-tetraoctyl distannoxane, 1,3-dichlorotetradodecyl distannoxane, 1,3-dibromotetrabutyl distannoxane, 1-hydroxy-3-chlorotetrabutyl distannoxane, 1-hydroxy-3-chlorotetraoctyl distannoxane, 1-hydroxy-3-chlorotetradodecyl distannoxane, 1-hydroxy-3 bromo-tetrabutyl distannoxane, 1-methoxy-3-chlorotetrabutyl distannoxane, 1-methoxy-3-chlorotetraoctyl distannoxane, 1-ethoxy-3-chlorotetrabutyl distannoxane, 1-ethoxy-3-chlorotetra-octyl distannoxane, 1-ethoxy-3-chlorotetradodecyl distannoxane, 1-phenoxy-3-chlorotetrabutyl distannoxane, 1-methoxy-3-bromo-tetrabutyl distannoxane, 1-ethoxy-3-bromotetrabutyl distannoxane, 1-phenoxy-3-bromotetrabutyl distannoxane, 1-hydroxy-3-(isothio-cyanato)tetrabutyl distannoxane, 1-hydroxy-3-(isothiocyanato)tetraoctyl distannoxane, 1-hydroxy-3-(isothiocyanato)tetradodecyl distannoxane, 1-methoxy-3-(isothiocyanato)tetrabutyl distannoxane, 1-ethoxy-3-(isothiocyanato)-tetrabutyl distannoxane, 1-methoxy-3-(isothiocyanato)-tetraoctyl distannoxane, 1-ethoxy-3-(isothiocyanato)tetraoctyl distannoxane, 1-ethoxy-3-(isothiocyanato)tetradodecyl distannoxane, 1-phenoxy-3-(isothiocyanato)tetrabutyl distannoxane, 1,3-bis(isothio-cyanato)-tetrabutyl distannoxane, 1-3-bis(isothiocyanato)tetramethyl distannoxane, 1,3-bis(isothiocyanato)tetraoctyl distannoxane, and 1,3-bis(isothiocyanato)tetradodecyl distannoxane may be cited.

These catalysts can be easily synthesized; 1,3-dichloro-tetraphenyl distannoxane, as described in J. Organomet. Chem. 3, p. 70 (1965), and 1-hydroxy-3-(isothiocyanate)tetrabutyl distannoxane, as described in J. Org. Chem. 56, P.5307, (1991), by reacting dibutyltin oxide with dibutyltin diisothio-cyanate in ethanol.

In this invention, these catalysts may be used either on their own or in the form of a mixture of two or more compounds when appropriate.

The amount of catalyst to be added to the raw materials in the form of monomers ranges from 1/500 to 1/40000 mol, preferably from 1/1000 to 1/20000 mol, per mol of the monomers.

The solvent to be used in this invention is not limited to a particular one and may be any of the solvents which are generally used in the ring-opening polymerization. As concrete examples of the solvent, linear or cyclic ethers such as diisopropyl ether, tetrahydrofuran, and 1,4-dioxane, organic halogenides such as methylene bromide and dichloroethane, aromatic compounds such as toluene, benzene, and xylene, and mixtures thereof may be cited.

These solvents are commercially available. They are preferably refined, for example, by distillation from a solution containing metallic sodium and benzophenone in the presence of an inert gas and then stored in an inert gas until use.

Now, this invention will be described below more specifically with reference to working examples and test examples. It should be noted, however, that this invention is not limited to these working examples and test examples.

The analytical devices used in the working examples and the test examples and the devices used in the test for biodegradability are as follows.

1) Nuclear magnetic resonance spectrum (NMR): AM-400 type device (400 MHz) (produced by Bruker Corp.)

2) Molecular weight: D-2520 GPC Integrator (produced by Hitachi, Ltd.)

3) Heat quantity: Differential scanning calorimeter (DSC) DSC50 (produced by Shimadzu Seisakusho Ltd.)

4) Thermogravimetric analysis: Thermogravimetric analyzer, TGA50 (produced by Shimadzu Seisakusho Ltd.)

5) Specific rotation: Digital optical rotatory meter, DIP-360 type (produced by Nippon Bunko Kogyo K.K.)

6) Test for biodegradability: Activated sludge (procured from Chemical Product Testing Association on January 20, 1994)

Various tests were carried out, by using the above-mentioned devices, in accordance with the specifications on the microorganism test on chemical substances for assessing the degree of decomposition described in "Methods for Test of Novel Chemical Substances" ("BIODEGRADATION STUDIES" specified in Kanpogyo: Bureau certified No. 5, Yakuho: Bureau certified No. 615, 49 Kikyoku: Bureau certified No. 392, July 13,1974; revised on March 31, 1987) and also described in the article of Y. Doi, A. Segawa, and M. Kunioka (Int. J. Biol. Macromol., 1990, Vol. 12, April, 106).

The data obtained in the following working examples and the comparative examples concerning the synthesis of block polyester copolymer, specifically the ratio of monomers charged, ratio of monomer contents in block polyester copolymer, weight average molecular weight (Mw), number average molecular weight (Mn), glass transition point (Tg), melting point (Tm), decomposition temperature (Td), and specific rotatory power ($[\alpha]25_D$), are collectively shown in Table 1.

Example 1: Synthesis of AB type block polyester (hereinafter referred to briefly as "P[(R)-3HB]-PCL") by sequential ring-opening copolymerization of (R)-β-butyrolactone (hereinafter referred to briefly as "(R)-BL") and ε-caprolactone (hereinafter referred to briefly as "CL")

In a reaction vessel having an inner volume of 20 ml, 1.72 g (20 m mol) of (R)-BL, 2.0 ml of toluene, and 5.6 mg (0.005 m mol) of 1-ethoxy-3-chlorotetrabutyl distannoxane were placed and stirred at 100°C for 5.5 hours under argon (hereinafter referred to briefly as "Ar"). Then, 2.0 ml of toluene and 2.28 g (20 m mol) of CL were added to the reaction solution immediately thereafter and left to react for 1.5 hours. By dissolving the reaction product in chloroform, pouring the resultant solution into a mixed solution (1: 3) of diethyl ether and hexane and thereby inducing reprecipitation, 3.74 g (yield 93.5%) of the captioned block polymer were obtained.

Example 2: Synthesis of P[(R)-3HB]-PCL by sequential ring-opening copolymerization of (R)-BL and CL

In a reaction vessel having an inner volume of 30 ml, 3.44 g (40 m mol) of (R)-BL and 12.0 mg (0.01 m mol) of 1-ethoxy-3-chlorotetrabutyl distannoxane were placed and stirred at 100°C for three hours under Ar. Then, 0.5 ml of toluene and 4.57 g (40 m mol) of CL were added to the reaction solution immediately thereafter and left to react for one hour. By dissolving the reaction product in chloroform, pouring the resultant solution into a mixed solution (1: 3) of diethyl ether and hexane and thereby inducing reprecipitation, 4.57 g (yield 55.2%) of the captioned block polymer were obtained.

Example 3: Synthesis of P[(R)-3HB]-PCL by sequential ring-opening copolymerization of(R)-BL and CL

In a reaction vessel having an inner volume of 30 ml, 3.57 g (41.5 m mol) of (R)-BL and 0.0214 mg (0.021

m mol) of 1-thio-isocyanato-3-hydroxytetrabutyl distannoxane were placed and stirred at 100°C for 1.5 hours under Ar. Then, 0.5 ml of toluene was added to the reaction solution and left to react for 0.5 hour. Subsequently 4.78 g (41.9 m mol) of CL were added and left to react for one hour. By dissolving the reaction product in chloroform, pouring the resultant solution into a mixed solution (1: 3) of diethyl ether and hexane and thereby inducing reprecipitation, 7.22 g (yield 86.5%) of the captioned block polymer were obtained.

Example 4: Synthesis of P[(R)-3HB]-PCL by sequential ring-opening copolymerization of (R)-BL and CL

In a reaction vessel having an inner volume of 30 ml, 3.54 g (41.1 m mol) of (R)-BL and 22.4 mg (0.021 m mol) of 1-chloro-3-hydroxytetrabutyl distannoxane were placed and stirred at 100°C for 1.5 hours under Ar. Then, 0.5 ml of toluene was added to the reaction solution and left to react for 0.5 hour. Subsequently, 4.67 g (40.9 m mol) of CL were added and left to react for 1.5 hours. By dissolving the reaction product in chloroform, pouring the resultant solution into a mixed solution (1: 3) of diethyl ether and hexane and thereby inducing reprecipitation, 5.18 g (yield 63.1%) of the captioned block polymer were obtained.

Example 5: Synthesis of P[(R)-3HB]-PCL by sequential ring-opening copolymerization of (R)-BL and CL

In a reaction vessel having an inner volume of 20 ml, 1.72 g (20 m mol) of (R)-BL, 2.0 ml of toluene, and 7.9 mg (0.005 m mol) of 1-ethoxy-3-chlorotetrabutyl distannoxane were placed and stirred at 100°C for 3 hours under Ar. Then, 4.0 ml of toluene and 4.57 g (40 m mol) of CL were added to the reaction solution immediately thereafter and left to react for one hour. By dissolving the reaction product in chloroform, pouring the resultant solution into a mixed solution (1: 3) of diethyl ether and hexane and thereby inducing reprecipitation, 5.95 g (yield 94.6%) of the captioned block polymer were obtained.

Example 6: Synthesis of P[(R)-3HB]-PCL by sequential ring-opening copolymerization of (R)-BL and CL

In a reaction vessel having an inner volume of 20 ml, 2.58 g (30 m mol) of (R)-BL, 3.0 ml of toluene, and 8.4 mg (0.0075 m mol) of 1-ethoxy-3-chlorotetrabutyl distannoxane were placed and stirred at 100°C for 3 hours under Ar. Then, 1.5 ml of toluene and 1.71 g (15 m mol) of CL were added to the reaction solution immediately thereafter and left to react for one hour. By dissolving the reaction product in chloroform, pouring the resultant solution into a mixed solution (1: 3) of diethyl ether and hexane and thereby inducing reprecipitation, 3.55 g (yield 82.7%) of the captioned block polymer were obtained.

Example 7: Synthesis of P[(R)-3HB]-PCL by sequential ring-opening copolymerization of (R)-BL and CL

In a reaction vessel having an inner volume of 20 ml, 1.72 g (20 m mol) of (R)-BL, 2.0 ml of toluene, and 5.6 mg (0.005 m mol) of 1-ethoxy-3-chlorotetraoctyl distannoxane were placed and stirred at 100°C for 3 hours under Ar. Then, 2.0 ml of toluene and 2.29 g (20 m mol) of CL were added to the reaction solution immediately thereafter and left to react for one hour. By dissolving the reaction product in chloroform, pouring the resultant solution into a mixed solution (1 : 3) of diethyl ether and hexane and thereby inducing reprecipitation, 3.86 g (yield 96.3%) of the captioned block polymer were obtained.

Example 8: Synthesis of P[(R)-3HB]-PCL by sequential ring-opening copolymerization of (R)-BL and CL

In a reaction vessel having an inner volume of 80 ml, 3.44 g (40 m mol) of (R)-BL, 4.0 ml of toluene, and 11.2 mg (0.01 m mol) of 1-ethoxy-3-chlorotetraoctyl distannoxane were placed and stirred at 100°C for 3 hours under Ar. Then, 18.26 g (160 m mol) of CL were added to the reaction solution and left to react for one hour. By dissolving the reaction product in chloroform, pouring the resultant solution into a mixed solution (1 : 3) of diethyl ether and hexane and thereby inducing reprecipitation, 21.02 g (yield 96.9%) of the captioned block polymer were obtained.

Example 9: Synthesis of AB type block polyester (hereinafter referred to briefly as "P[(R)-3HB]-PVL") by sequential ring-opening copolymerization of (R)-BL and δ-valerolactone (hereinafter referred to briefly as "VL")

In a reaction vessel having an inner volume of 20 ml, 1.72 g (20 m mol) of (R)-BL, 2.0 ml of toluene, and 5.6 mg (0.005 m mol) of 1-ethoxy-3-chlorotetrabutyl distannoxane were placed and stirred at 100°C for 3 hours under Ar. Then, 2.0 ml of toluene and 2.00 g (20 m mol) of VL were added to the reaction solution and left to react for three hours. By dissolving the reaction product in chloroform, pouring the resultant solution into a

mixed solution 1 : 3 of diethyl ether and hexane and thereby inducing reprecipitation, 3.27 g (yield 87.9%) of the captioned block polymer were obtained.

Example 10: Synthesis of AB type block polyester (hereinafter referred to briefly as "P[(R)-3HB]-PMVL") by sequential ring-opening copolymerization of (R)-BL and β-methyl-δ-valerolactone (hereinafter referred to briefly as "MVL")

In a reaction vessel having an inner volume of 20 ml, 1.72 g (20 m mol) of (R)-BL, 2.0 ml of toluene, and 5.6 mg (0.005 m mol) of 1-ethoxy-3-chlorotetrabutyl distannoxane were placed and stirred at 100°C for 3 hours under Ar. Then, 2.0 ml of toluene and 2.28 g (20 m mol) of MVL were added to the reaction solution immediately thereafter and left to react for five hours. By dissolving the reaction product in chloroform, pouring the resultant solution into a mixed solution (1:3) of diethyl ether and hexane and thereby inducing reprecipitation, 2.66 g (yield 66.5%) of the captioned block polymer were obtained.

Example 11: Synthesis of AB type block polyester (hereinafter referred to briefly as "P[(R)-3HB]-P(L-LA)") by sequential ring-opening copolymerization of(R)-BL and L-lactide (hereinafter referred to briefly as "L-LA")

In a reaction vessel having an inner volume of 20 ml, 1.72 g (20 m mol) of (R)-BL, 2.0 ml of toluene, and 5.6 mg (0.005 m mol) of 1-ethoxy-3-chlorotetrabutyl distannoxane were placed and stirred at 100°C for three hours under Ar. Then, a solution of 2.53 g (17.6 m mol) of L-LA in 3.0 ml of toluene was added to the reaction solution and left to react for 20 hours. By dissolving the reaction product in chloroform, pourring the resultant solution into a mixed solution (1:3) of diethyl ether and hexane and thereby inducing reprecipitation, 3.22 g (yield 68.7%) of the captioned block polymer were obtained.

Example 12: Synthesis of AB type block polyester (hereinafter referred to as "P[(R)-3HB]-P[(R)-MDO]") by sequential ring-opening copolymerization of (R)-BL and (R)-7-methyl-1,4-dioxepan-5-one(hereinafter referred to as "(R)-MDO")

In a reaction vessel having an inner volume of 20 ml, 1.72 g (20 m mol) of (R)-BL, 2.0 ml of toluene, and 11.2 mg (0.01 m mol) of 1-ethoxy-3-chlorotetrabutyl distannoxane were placed and stirred at 100°C for two hours under Ar. Then, a solution of 2.77 g (21.3 m mol) of (R)-MDO in 2.0 ml of toluene was added to the reaction solution and left to react for three hours. By dissolving the reaction product in chloroform, pouring the resultant solution into a mixed solution (1:3) of diethyl ether and hexane and thereby inducing reprecipitation, 4.04 g (yield 90.0%) of the captioned block polymer were obtained.

Example 13: Synthesis of AB type block polyester (hereinafter referred to as "P[(R)-3HB]-P[(S)-MDO]") by sequential ring-opening copolymerization of (R)-BL and (S)-7-methyl-1,4-dioxepan-5-one (hereinafter referred to briefly as "(S)-MDO")

In a reaction vessel having an inner volume of 20 ml, 1.72 g (20 m mol) of (R)-BL, 2.0 ml of toluene, and 11.2 mg (0.01 m mol) of 1-ethoxy-3-chlorotetrabutyl distannoxane were placed and stirred at 100°C for 1.5 hours under Ar. Then, a solution of 2.58 g (19.8 m mol) of (S)-MDO in 2.0 ml of toluene was added to the reaction solution and left to react for one hour. By dissolving the reaction product in chloroform, pouring the resultant solution into a mixed solution (1:3) of diethyl ether and hexane and thereby inducing reprecipitation, 3.98 g (yield 92.6%) of the captioned block polymer were obtained.

Example 14: Synthesis of AB type block polyester (hereinafter referred to as "P[(R)-3HB]-P(DMPL)") by sequential ring-opening copolymerization of (R)-BL and α,α-dimethyl-β-propionlactone (hereinafter referred to briefly as "DMPL")

In a reaction vessel having an inner volume of 20 ml, 1.72 g (20 m mol) of (R)-BL, 2.0 ml of toluene, and 11.2 mg (0.01 m mol) of 1-ethoxy-3-chlorotetrabutyl distannoxane were placed and stirred at 100°C for two hours under Ar. Then, 2.0 ml of toluene and 2.00 g (20 m mol) of DMPL were added to the reaction solution immediately thereafter and left to react for 20 hours. By dissolving the reaction product in chloroform, pouring the resultant solution into a mixed solution (1:3) of diethyl ether and hexane and thereby inducing reprecipitation, 1.92 g (yield 51.6%) of the captioned block polymer were obtained.

Example 15: Synthesisof AB type block polyester (hereinafter referred to briefly as "PT(R)-3HB]-PHB") by sequential ring-opening copolymerization of(R)-BL and β-butyrolactone (racemiform) (hereinafter referred to briefly as "BL")

In a reaction vessel having an inner volume of 20 ml, 1.72 g (20 m mol) of (R)-BL, 2.0 ml of toluene, and 11.2 mg (0.01 m mol) of 1-ethoxy-3-chlorotetrabutyl distannoxane were placed and stirred at 100°C for 3.5 hours under Ar. Then, 1.72 g (20 m mol) of BL were added to the reaction solution and left to react for three hours. By dissolving the reaction product in chloroform, pouring the resultant solution into a mixed solution (1:3) of diethyl ether and hexane and thereby inducing reprecipitation, 2.61 g (yield 75.9%) of the captioned block polymer were obtained.

Example 16: Synthesis of AB type block polyester (hereinafter referred to briefly as "P[(R)-3HB]-P[(S)-3HB]") by sequential ring-opening copolymerization of (R)-BL and (S)-β-butyrolactone (hereinafter referred to briefly as "(S)-BL")

In a reaction vessel having an inner volume of 20 ml, 1.72 g (20 m mol) of (R)-BL, 2.0 ml of toluene, and 11.2 mg (0.01 m mol) of 1-ethoxy-3-chlorotetrabutyl distannoxane were placed and stirred at 100°C for 2.5 hours under Ar. Then, 1.72 g (20 m mol) of (S)-BL were added to the reaction solution and left to react for four hours. By dissolving the reaction product in chloroform, pouring the resultant solution into a mixed solution (1:3) of diethyl ether and hexane and thereby inducing reprecipitation,2.71 g (yield 78.8%) of the captioned block polymer were obtained.

Example 17: Synthesis of AB type block polyester (hereinafter referred to briefly as "P[(R)-3HB]-PGL") by sequential ring-opening copolymerization of(R)-BL and glycolide (hereinafter referred to briefly as "GL")

In a reaction vessel having an inner volume of 20 ml, 1.72 g (20 m mol) of (R)-BL, 2.0 ml of toluene, and 11.2 mg (0.01 m mol) of 1-ethoxy-3-chlorotetrabutyl distannoxane were placed and stirred at 100°C for 3.5 hours under Ar. Then, a solution of 2.23 g (19.2 m mol) of GL in 5.0 ml of dichloroethane was added to the reaction solution and left to react for one hour. By subjecting the reaction product in a solid state to desiccation under a reduced pressure, 3.94 g (yield 99.7%) of the captioned block polymer were obtained.

Example 18: Synthesis of ABA type block polyester (hereinafter referred to briefly as "P[(R)-3HB]-PCL-P[(R)-3HB]") by sequential ring-opening copolymerization of (R)-BL and CL

In a reaction vessel having an inner volume of 30 ml, 1.72 g (20 m mol) of (R)-BL, 0.5 ml of toluene, and 22.5 mg (0.02 m mol) of 1-ethoxy-3-chlorotetrabutyl distannoxane were placed and stirred at 100°C for one hour under Ar. To the reaction solution, 0.5 ml of toluene and 2.28 g (20.0 m mol) of CL were added and left to react for six minutes, then further 1.0 ml of toluene and 1.72 g (20.0 mol) of (R)-BL were added and left reacting for three hours. By dissolving the reaction product in chloroform, pouring the resultant solution into a mixed solution (1:3) of diethyl ether and hexane and thereby inducing reprecipitation, 4.97 g (yield 87.0%) of the captioned block polymer were obtained.

Example 19: Synthesis of ABA type block polyester (hereinafter referred to as "P[(R)-3HB]-P[(R)-MDO]-P[(R)-3HB]") by sequential ring-opening copolymerization of (R)-BL and (R)-MDO

In a reaction vessel having an inner volume of 30 ml, 1.57 g (18.2 m mol) of (R)-BL, 0.5 ml of toluene, and 22.5 mg (0.02 m mol) of 1-ethoxy-3-chlorotetrabutyl distannoxane were placed and stirred at 100°C for 1.5 hours under Ar. To the reaction solution, 1.0 ml of toluene and 3.30 g (25.8 m mol) of (R)-MDO were added and left to react for 20 minutes,then further 1.25 g (14.5 m mol) of (R)-BL were added thereto and left reacting for 2.5 hours. By dissolving the reaction product in chloroform, pouring the resultant solution into a mixed solution (1:3) of diethyl ether and hexane and thereby inducing reprecipitation, 4.75 g (yield 77.6%) of the captioned block polymer were obtained.

Example 20: Synthesis of AB type block polyester (hereinafter referred to briefly as "P[(R)-3HB]6P(15PD)") by sequential ring-opening copolymerization of (R)-BL and 15-pentadecanolide (hereinafter referred to briefly as "15-PD").

In a reaction vessel having an inner volume of 80 ml, 3.44 g (40 mmol) of (R)-BL and 22.5 mg (0.02 mmol)

of 1-ethoxy-3-chlorotetrabutyl distannoxane were placed and stirred at 100°C for 50 minutes under Ar. To the reaction solution, 4.0 ml of toluene was added an stirred for 2.5 hours. Then a solution of 7.27 g (30.2 mmol) of 15-PD in 4.0 ml of toluene were added and left to react for 8 hours. By dissolving the reaction product in chloroform, pouring the resultant solution into a mixed solution (1:3) of diethyl ether and hexane and thereby inducing reprecipitation, 7.38 g (yield 68.9%) of the captioned block polymer were obtained.

Example 21: Synthesis of AB type block polyester (hereinafter referred to briefly as "P[(R)-3HB]-P(11-0-16-HD)") by sequential ring-opening copolymerization of (R)-BL and 11-oxa-16-hexadecanolide (hereinafter referred to briefly as "11-0-16-HD")

In a reaction vessel having an inner volume of 80 ml, 3.44 g (40 m mol) of (R)-BL and 22.5 mg (0.02 m mol) of 1-ethoxy-3-chlorotetrabutyl distannoxane were placed and stirred at 100°C for 50 minutes under Ar. To the reaction solution, 4.0 ml of toluene were added and stirred for 1.5 hours. Then a solution of 5.07 g (19.8 m mol) of 11-0-16HD in 2.0 ml of toluene was added and left to react for 19 hours. By dissolving the reaction product in chloroform pouring the resultant solution into methanol and thereby inducing reprecipitation, 5.77 g (yield 67.8%) of the captioned block polymer were obtained.

Comparative Example 1: Synthesis of P[(R)-3HB]-PCL from microorganically produced P[(R)-3HB] and CL

In a reaction vessel having an inner volume of 200 ml, 6.0 g of microorganism-originated P[(R)-3HB], 8.0 g (70.1 m mol) of CL, 0.1 g (1.04 m mol) of methanesulfonic acid, and 70 ml of 1,2-dichloroethane were placed, refluxed and stirred for 6.5 hours under Ar. By pouring the resultant reaction mixture in 300 ml of methanol, thereby inducing reprecipitation, 11.2 g (yield 80.1%) of the captioned copolymer were obtained.

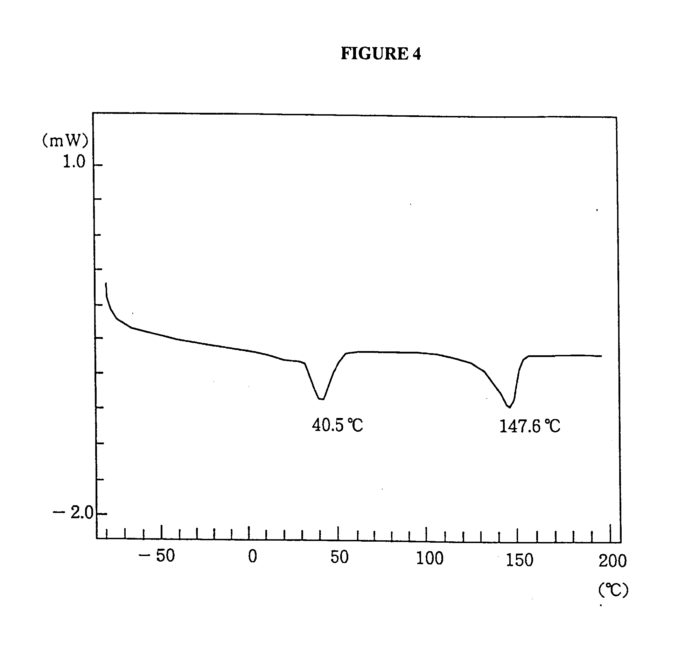

The data of DSC (thermal analysis) of the copolymer obtained in Comparative Example 1 are shown in Fig. 2. The DSC data obtained from a sinple blend of synthetic P[(R)-3HB] and PCL are shown in Fig. 3 and the DSC data obtained from the P[(R)-3HB]-PCL block polyester produced in Example 1 are shown in Fig. 4. Comparison of these diagrams, demonstrates that the data of Fig. 2 and those of Fig. 3 bear a striking resemblance and that those of Fig. 2 and Fig. 4 are noticeably different. This fact suggests that such process of production as is disclosed in JP-A-04-153,215 does not produce a block polyester copolymer of P[(R)-3HB]-PCL but produces simply a blend of P[(R)-3HB] and PCL.

Comparative Example 2: Synthesis of P(3HB)-PCL by sequential ring-opening copolymerization of BL and CL

In a reaction vessel having an inner volume of 30 ml, 3.53 g (41 m mol) of BL and 12.0 mg (0.01 m mol) of 1-ethoxy-3-chlorotetrabutyl distannoxane were placed and stirred at 100°C for 1.5 hours under Ar. Then, 0.5 ml of toluene and 5.30 g (46 m mol) of CL were added to the reaction solution immediately thereafter and left to react for one hour. By dissolving the reaction product in chloroform, pouring the resultant solution into a mixed solution (1:3) of diethyl ether and hexane and thereby inducing reprecipitation, 7.61 g (yield 86.2%) of the captioned block polymer were obtained.

[Table 1]

| | Charging ratio | Monomer content ratio | Mw | Mn | Tg(°C)* | Tm(°C) | Td(°C) | $[\alpha]_D^{23}$ (C)=1 |
|---|---|---|---|---|---|---|---|---|
| Example 1 | (R)-BL/CL 50/50 | 50/50 | 251000 | 162000 | -57 | 41, 148 | 293, 381 | -0.88 |
| Example 2 | (R)-BL/CL 50/50 | 51/49 | 250000 | 150000 | -59 | 35, 156 | 275, 380 | -0.88 |
| Example 3 | (R)-BL/CL 50/50 | 50/50 | 248000 | 143000 | -57 | 38, 151 | 283 | -0.83 |
| Example 4 | (R)-BL/CL 50/50 | 50/50 | 241000 | 138000 | -58 | 39, 153 | 282 | -0.87 |
| Example 5 | (R)-BL/CL 33/67 | 29/71 | 422000 | 233000 | -55 | 47, 145 | 268, 380 | -1.08 |
| Example 6 | (R)-BL/CL 67/33 | 60/40 | 259000 | 161000 | -39 | 31, 150 | 293 | -1.88 |
| Example 7 | (R)-BL/CL 50/50 | 50/50 | 245000 | 140000 | -58 | 39, 152 | 283 | -0.85 |
| Example 8 | (R)-BL/CL 20/80 | 19/81 | 1180000 | 470000 | -55 | 55, 151 | 381 | -0.60 |
| Example 9 | (R)-BL/VL 50/50 | 51/49 | 362000 | 222000 | -50 | 135 | 284 | -1.28 |
| Example 10 | (R)-BL/MVL 50/50 | 66/34 | 273000 | 151000 | -35 | 143 | 282 | -1.74 |
| Example 11 | (R)-BL/L-LA 53/47 | 51/49 | 160000 | 126000 | -13, 27 | 143, 158 | 275 | -86.3 |
| Example 12 | (R)-BL/(R)-MDO 48/52 | 49/51 | 185000 | 120000 | -34 | 133 | 286 | -17.0 |

(continued)

| | Charging ratio | Monomer content ratio | Mw | Mn | Tg(°C)* | Tm(°C) | Td(°C) | $[\alpha]_D^{23}$ (C)=1 |
|---|---|---|---|---|---|---|---|---|
| Example 13 | (R)-BL/(S)-MDO 50/50 | 50/50 | 196000 | 127000 | -34 | 142 | 280 | +15.7 |
| Example 14 | (R)-BL/ααDMPL 50/50 | 85/15 | 171000 | 116000 | - | 143 | 284 | -2.89 |
| Example 15 | (R)-BL/BL 50/50 | - | 219000 | 115000 | 5 | 72, 152 | 250 | -0.78 |
| Example 16 | (R)-BL/(S)-BL 50/50 | - | 213000 | 141000 | 2 | 149 | 287 | +0.03 |
| Example 17 | (R)-BL/GL 51/49 | - | - | - | - | 147, 222 | 288 | - |
| Example 18 | (R)-BL/CL/(R)-BL 10/10/10 | 10/10/2 | 180000 | 120000 | - | 35, 167 | 275 | -1.57 |
| Example 19 | (R)-BL/(R)-MDO/(R)-BL 31/44/25 | 38/48/14 | 128000 | 64000 | -29 | 155 | 285 | -16.5 |
| Example 20 | (R)-BL/15-PD 57/43 | 61/39 | 228000 | 140000 | - | 72, 154 | 288 | -1.50 |
| Example 21 | (R)-BL/11-O-16-HD 67/33 | 78/22 | 119000 | 77000 | - | 41, 159 | 285 | -1.80 |
| Comparative Example 1 | P[(R)-3HB]/CL 6.0g/8.0g | 54/46 | 87000 | 35000 | - | 56, 172 | 292, 344 | - |
| Comparative Example 2 | BL/CL 47/53 | 42/58 | 380000 | 170000 | -36 | 33 | 280, 378 | - |

* The symbol "-" in the column titled "Tg (°C)" designates the absence of a discernible peak in the curve.

Test Example 1: Test of polymer of Example 1 for biodegradability

A thin film of the polymer obtained in Example 1, having 17 to 25 mg, in total weight, 1 cm x 1 cm in area and 0.05 to 0.1 mm in thickness, (produced by dissolving the polymer in chloroform, casting the solution in a petri dish, and evaporating the solvent: a film being thus obtained as residue) was placed in a flask and tested for biodegradability by using water bath (produced by Tytech K.K.) under stirring, together with 500 ppm (600 ml) of activated sludge, at pH 6.0 to 7.0, and at a temperature of 25°C.

The thin film of polymer was weighed after one week, two weeks, three weeks, and four weeks to assess the weight decrease. The results, shown in Fig. 1, clearly indicate that the polymer film obtained in Example 1 showed a decrease of 1.29 mg of weight after four weeks of exposure.

Test Example 2: Test of polymer of Example 5 for biodegradability

The polymer obtained in Example 5 was tested for biodegradability by following the procedure of Test Example 1. The results are shown in Fig. 1. The polymer film showed a decrease of 1.34 mg of weight after four weeks of exposure.

Test Example 3: Test of polymer of Example 6 for biodegradability

The polymer obtained in Example 6 was tested for biodegradability by following the procedure of Test Example 1. The results are shown in Fig. 1. The polymer film showed a decrease of 4.28 mg of weight after four weeks of exposure.

Test Example 4: Test of polymer of Example 9 for biodegradability

The polymer obtained in Example 9 was tested for biodegradability by following the procedure of Test Example 1. The results are shown in Fig. 1. The polymer film showed a decrease of 9.74 mg of weight after four weeks of exposure.

Test Example 5: Test of polymer of Example 10 for biodegradability

The polymer obtained in Example 10 was tested for biodegradability by following the procedure of Test Example 1. The results are shown in Fig. 1. The polymer film showed a decrease of 4.03 mg of weight after four weeks of exposure.

Test Example 6: Test of polymer of Example 11 for biodegradability

The polymer obtained in Example 11 was tested for biodegradability by following the procedure of Test Example 1. The results are shown in Fig. 1. The polymer film showed a decrease of 0.92 mg of weight after four weeks of exposure.

Test Example 7: Test of polymer of Example 13 for biodegradability

The polymer obtained in Example 13 was tested for biodegradability by following the procedure of Test Example 1. The results are shown in Fig. 1. The polymer film showed a decrease of 4.95 mg of weight after four weeks of exposure.

Test Example 8: Test of polymer of Example 15 for biodegradability

The polymer obtained in Example 15 was tested for biodegradability by following the procedure of Test Example 1. The results are shown in Fig. 1. The polymer film showed a decrease of 6.13 mg of weight after four weeks of exposure.

The optically active block copolymer polyester of this invention is produced by subjecting an optically active β-butyro-lactone and a lactone other than the optically active β-butyro-lactone to ring-opening polymerization in the presence of a highly active catalyst as described above. Thus, the process according to the present invention provides a biodegradable and hydrolyzable material possessing a high molecular weight and a high melting point and exhibiting high strength capable of withstanding the impacts incurred in actual use. This invention provides clean plastic materials which avoid polluting the environment. Particularly, since the present

invention allows easy production of biodegradable and hydrolyzable polyesters having melting points not lower than 130°C, it will find a new utility and applications as materials for films capable of withstanding hot temperatures such as hot water and an electric or electronic range, as surface films on paper cups, laminate materials, plasticizers for biodegradable polyesters, and agents for imparting compatibility , as well as applications as fishing lines, fishing nets, sheets for agricultural structures, wrapping films, medical materials, etc. Further, the polymers according to this invention possess bioadaptability and are, in vivo, liable to hydrolysis and absorption and, therefore, find utility as such medical materials as surgical sutures and clips which do not have to be removed after use. Particularly, the block copolymer polyesters which are obtained by using a distannoxane catalyst of the general formula (III) having an alkyl group of 8 to 12 carbon atoms enjoy high safety and prove particularly useful for medical materials.

## Claims

1. An optically active block copolymer polyester comprising of structural units represented by the following general formulas (I) and (II):

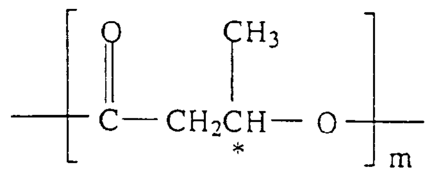

(I)

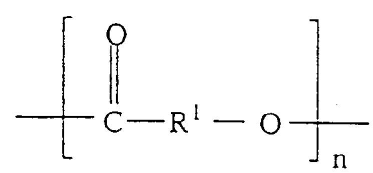

(II)

(wherein *C stands for an asymmetric carbon atom, $R^1$ stands for a group selected from the class consisting of
$-(CH_2)_x-$, $-CH_2CH(CH_3)-$, $-CH_2CH(C_2H_5)-$, $-CH(CH_3)CH(CH_3)-$, $-C(CH_3)_2CH_2-$, $-CH(CH_3)CH_2CH_2-$, $-CH_2CH(CH_3)CH_2-$, $-CH_2CH_2CH(CH_3)-$, $-CH_2CH(CH_3)CH_2CH_2-$, $-CH(CH_3)OCOCH-(CH_3)-$, $CH_2OCOCH_2-$, $CH_2CH(CH_3)OCH_2CH_2-$, $-(CH_2)_7CH=CH(CH_2)_6-$, $-(CH_2)_{10}O(CH_2)_4-$, $-(CH_2)_9O(CH_2)_5-$, and $-(CH_2)_8O(CH_2)_6-$, x stands for a natural number ranging from 2 to 15, and m and n each stands for a natural number ranging from 300 to 10 000).

2. The optically active block copolymer polyester according to claim 1, wherein the molar ratio of said structural unit (I) to said structural unit (II) is in the range of 10 - 90: 90 - 10 and the molecular weight of said polyester ranges from 60000 to 2000000.

3. A method for the production of the optically active block copolymer polyester set forth in claim 1 or 2, characterized by subjecting an optically active β-butyrolactone and a lactone compound other than said optically active β-butyrolactone to sequential ring-opening copolymerization in the presence of a catalyst.

4. The method according to claim 3, wherein said catalyst is selected from the group consisting of tin type catalysts.

5. The method according to claim 3 or 4, wherein said catalyst is a distannoxane catalyst represented by the following general formula (III):

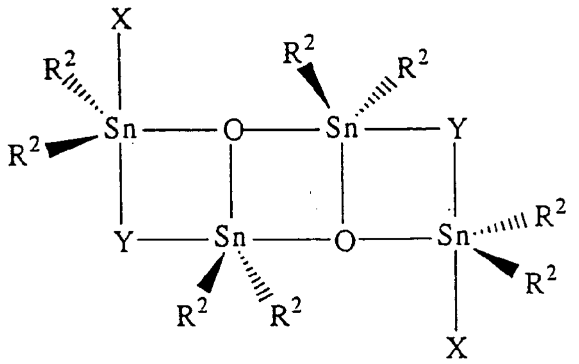

(III)

(wherein $R^2$ stands for an alkyl group having from one to 12 carbon atoms or a phenyl group, X stands for a member selected from the group consisting of Cl, Br, and NCS, and Y stands for a member selected from the class consisting of Cl, Br, NCS, OH, an alkoxy group having from one to four carbon atoms, and a phenoxy group).

FIGURE 1

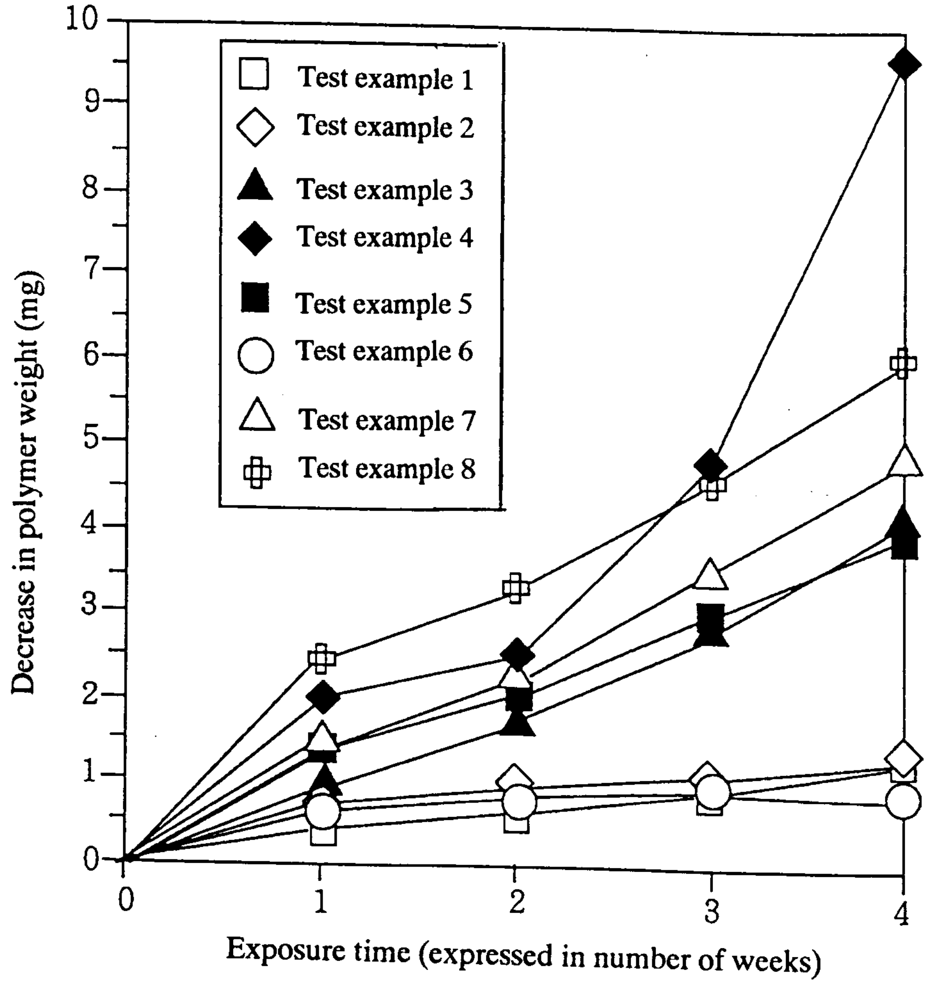
10
9
8
7
6
5
4
3
2
1
0
Decrease in polymer weight (mg)
Test example 1
Test example 2
Test example 3
Test example 4
Test example 5
Test example 6
Test example 7
Test example 8
0
1
2
3
4
Exposure time (expressed in number of weeks)

**FIGURE 2**

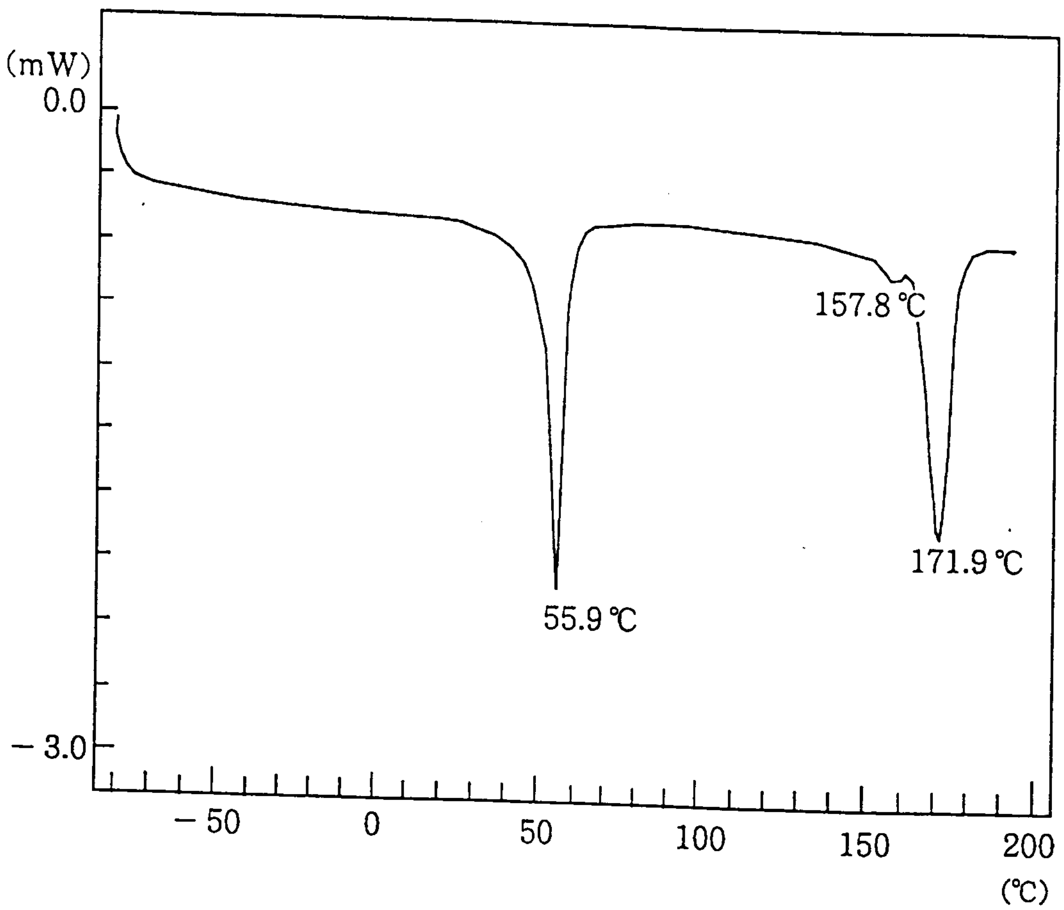

**FIGURE 3**

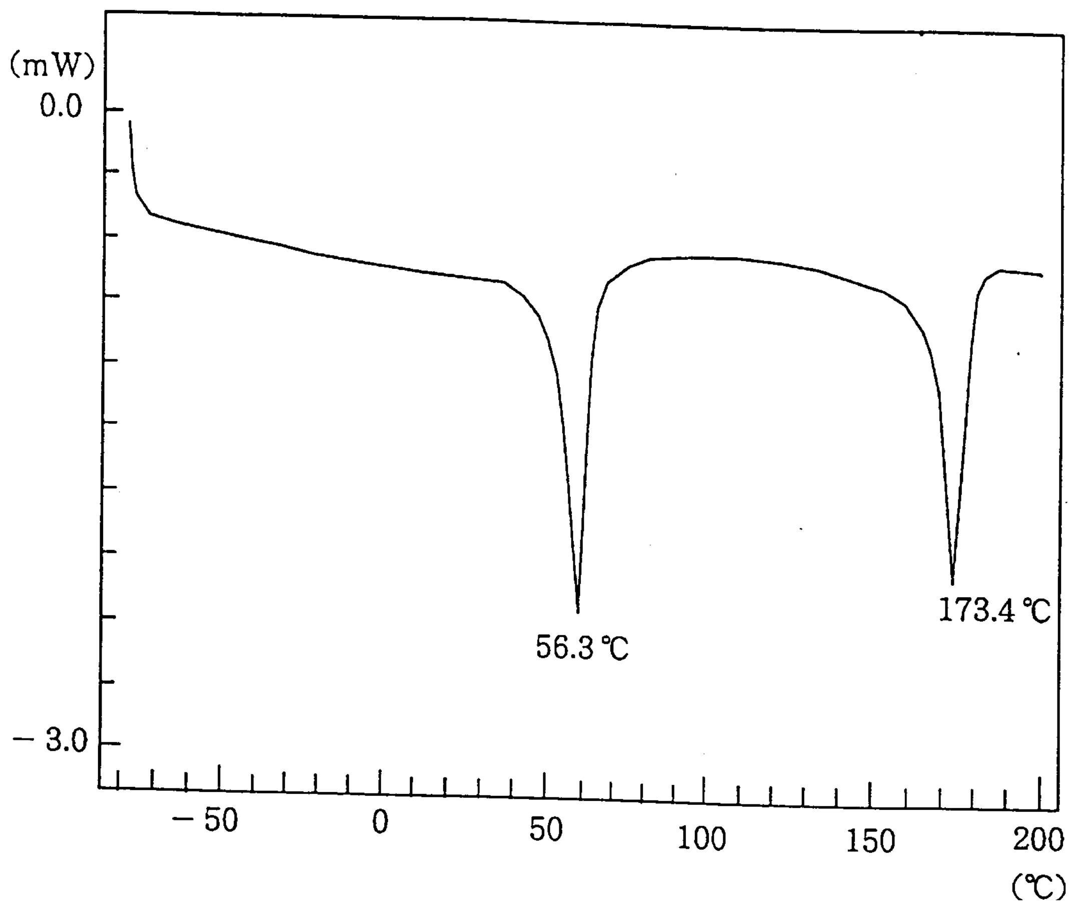

**FIGURE 4**